# EUROPEAN PATENT APPLICATION

(11) **EP 1 667 454 A1**
(43) Date of publication of application: **07.06.2006**
(21) Application number: 04771364.9
(22) Date of filing: 06.08.2004
(51) Int. Cl.: H04N 7/173, G06F 13/00, G06F 12/14

(54) **CONTENT DISTRIBUTION SYSTEM, CONTENT DISTRIBUTION METHOD, CONTENT DISTRIBUTION SERVER, CONTENT REPRODUCTION APPARATUS, CONTENT DISTRIBUTION PROGRAM, AND CONTENT REPRODUCTION PROGRAM**

(30) Priority: 18.08.2003 JP 2003294613
(71) Applicant: Softbank Corp., Nihonbashi, Tokyo 103-8501 (JP)
(72) Inventor: SON, Masayoshi, Tokyo (JP)
(74) Representative: Grünecker, Kinkeldey, Stockmair & Schwanhäusser Anwaltssozietät
(86) International application number: PCT/JP2004/011365
(87) International publication number: WO 2005/018233

(57) **Abstract**

A content delivery system, that delivers content data including main story information into which advertisement information is inserted, is described which comprises a content delivery server 1 provided with an index data adding unit 1a operable to add index data describing the insertion position of the advertisement information to the content data, and a content transmitting unit 1c operable to transmit the content data to which the index data is added in response to a delivery request; and a viewer's terminal 3 provided with a content receiving unit 3a operable to receive the content data as transmitted from the content delivery server, a playback unit 3c operable to play back the content data, an index data extracting unit 3b operable to extract the index data, and an operation control unit 3h operable to control the operation of the playback unit 3c in accordance with the description of the index data.

By this configuration, in the streaming delivery of motion pictures on the Internet, it is possible to ensure that advertisement information is more certainly displayed when the content is played back at the viewer end.

## Description

### [Field of The Invention]

The present invention relates to a content delivery system, a content delivery method, a content delivery server, a content playback device, a content delivery program and a content playback program, in which content data is delivered together with advertisement information such as CM inserted into the content data.

### [Background Art]

In airwave broadcast media such as television and radio or other services of delivering media content such as images and music, charge-free systems are realized by inserting advertisement information such as commercial messages into content, and displaying the advertisement information during playing back the content to acquire advertisement fees or sponsor fees.

On the other hand, in addition to the so-called push delivery services such as traditional television broadcast or radio broadcast, the push delivery services for delivering content on demand in response to requests from the users through a wide area network such as the Internet are beginning to become popular as the recent content delivery services.

For example, there are released services for delivering image content of motion pictures such as movies, animations and live shows through a TCP/IP (Transmission Control Protocol/Internet Protocol) network, such as the Internet, constructed by network communication lines, for example, telephone lines (ADSL (Asymmetric Digital Subscriber Line) and the like) and lines for cable television. This on-demand content delivery service makes use mainly of the "streaming" technology for playing content data as it is downloaded over.

Also in the case of the streaming technology, the advertisement making use of motion pictures, i.e., movie advertisement is employed. However, in the case of video delivery systems, since the playback unit at the user end (playback software or playback apparatus) is usually provided with content playback control functions such as fast-forwarding and rewinding to enable viewers to skip advertisement information inserted into content, it is impossible to guarantee the display of the advertisement information, and thereby there is a problem that sufficient advertisement effects cannot be obtained as described above.

In order to solve this problem, Japanese Patent Published Application No. 2002-366835 discloses an exemplary solution.

In the case of the technique disclosed in this publication, displaying advertisements is guaranteed at the viewer's terminal by installing software, in the viewer's terminal, which inhibits or disables the playback control functions to skip the content playback position such as fast-forwarding.
More specifically speaking, in a content server, information is added to the respective motion picture clips (motion picture content and motion picture advertisements) of SMIL (Synchronized Multimedia Integrated Language) data in order to indicate whether or not each respective motion picture clip is an advertisement. Then, the software installed in the viewer's terminal determines, on the basis of the information, whether or not the current motion picture clip being played back is an advertisement image, and if advertisement information is being played back, it is guaranteed to display the advertisement by inhibiting or disabling the operations to change the content playback position such as fast-forwarding and rewinding, the operations to change the content playback speed such as double speed playback or slow playback, and the operations to skip the advertisement such as stopping playback.

However, in the case of the technique disclosed in the above patent publication 1, it is determined whether or not the current motion picture clip being played back is advertisement information by adding, to each motion picture clip, the information on whether or not it is an advertisement and reading the information, and therefore there is a problem that the skip operation cannot be inhibited or disabled unless advertisement information is being played back so that the skip operation can freely be performed during playing back the main story content.

### [Disclosure of the Invention]

It is an object of the present invention to provide a content delivery system, a content delivery method, a content delivery server, a content playback device, a content delivery program and a content playback program, in which it is possible to ensure that advertisement information is more certainly displayed when the content is played back at the viewer end in the case where motion pictures are streaming delivered on the Internet.
In order to accomplish the object as described above according to the present invention, when content data including main story information into which advertisement information is inserted is delivered, index data describing the insertion position of the advertisement information is added to the content data; the content data to which the index data is added is transmitted in response to a delivery request; the content data as transmitted is received; the index data is extracted; and the operation relating to the playback is controlled in accordance with the description of the index data.

In accordance with another invention, when content data including main story information into which advertisement information is inserted is delivered, count data relating to the data length of the advertisement information and a relative data length between a predetermined position of the main story and the insertion position of the advertisement information periodically is added into the content data; the content data to which the count data is added is transmitted in response to a delivery request; the content data as transmitted is received; the count data is extracted; and the operation relating to the playback is controlled in accordance with the description of the count data.

By the present invention, the location of advertisement information in the content is notified through the index data or count data to the receiving side in which the playback operation is controlled on the basis of the data, and thereby it is possible to inhibit such a user operation as the advertisement information is avoided, for example, fast-forwarding beyond the advertisement information, even when the content is being played back in a position other than the insertion position of advertisement information.

In the case of the above invention, preferably, the playback of the main story information is inhibited in accordance with whether or not there is the content data or count data. In this case, it is possible to inhibit unauthorized operations such as playing back from the middle of the content data or erasing the index data and count data.

In the case of the above invention, preferably, when the playback is to be started beyond the position from which advertisement information is inserted, the playback beyond the insertion position is performed only after performing the playback of the advertisement information. In this case, it is possible to forcibly display the advertisement information even when performing an operation such that the advertisement information is avoided, for example, the operation of skipping playback.

### [Brief Description of the Drawings]

[Fig. 1] Fig. 1 is a view for schematically showing the configuration of a content delivery system in accordance with a first embodiment of the present invention.
[Fig. 2] In Fig. 2, (a) is a block diagram for showing the internal configurations of a content delivery server 1 and a viewer's terminal 3 in accordance with the first embodiment, and (b) is an explanatory view for showing the data structure of streaming data.
[Fig. 3] Fig. 3 is a flow diagram for showing the procedure of a content delivery method in accordance with the first embodiment.
[Fig. 4] Fig. 4 is a flow diagram for showing the operation in response to a manipulation of the viewer.
[Fig. 5] in Fig. 5(a), (a) is a block diagram for showing the internal configurations of a content delivery server 1 and a viewer's terminal 3 in accordance with a second embodiment, and (b) is an explanatory view for showing the data structure of streaming data.
[Fig. 6] Fig. 6 is a flow diagram for showin the procedure of a content delivery method in accordance with the second embodiment.
[Fig. 7] Fig. 7 is a flow diagram for showing the operation in response to a manipulation of the viewer.
[Fig. 8] Fig. 8 is a perspective view for showing computer readable mediums in which are stored programs in accordance with an embodiment.

### [Best mode for carrying out the Invention]

[First Embodiment]

In what follows, a first embodiment of the present invention will be explained in detail with reference to drawings.

### (Configuration of System)

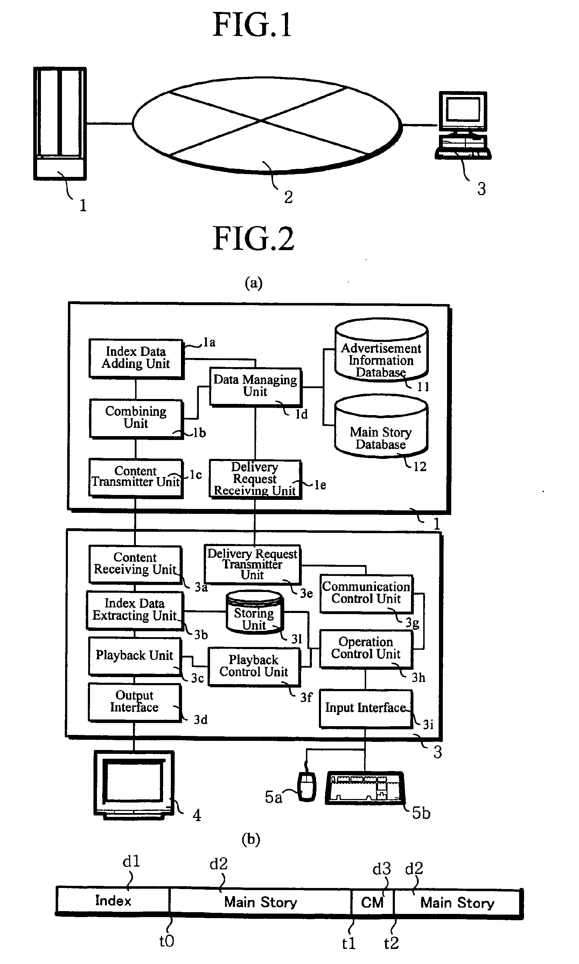

Fig. 1 is a view for schematically showing the configuration of a content delivery system in accordance with the first embodiment of the present invention. As shown in the same figure, the content delivery system provides a mechanism for delivering image content of motion pictures and the like through a network 2 together with advertisement information. The network 2 is a communication network constructed by connecting communication terminals and communication servers each other through wired and wireless communication lines and the like, for example, a LAN or a wide area network such as the Internet for performing data transmission and reception in accordance with a predetermined communication protocol such as TCP/IP (Transmission Control Protocol/Internet Protocol).

As shown in the same figure, this content delivery system includes a content delivery server 1 managed by a content provider who delivers content such as image content, and a viewer's terminal 3 owned by a viewer who watches content serviced by delivery through the network 2. The content delivery server 1 can be implemented, for example, by running a predetermined server application on a workstation (WS) or a personal computer (PC), or by any other configuration.

The viewer's terminal 3 can be implemented, for example, by running a client application such as a Web browser or a media playback application on a personal computer, a mobile telephone terminal, a PDA or any other terminal having a communication capability or, by any other configuration. The viewer's terminal 3 is connected to the content delivery server 1 through the network 2. Accordingly, the viewer transmits a delivery request to the content delivery server 1 by manipulating the viewer's terminal 30, and can receive a delivery service of content such as motion pictures provided by the content delivery server 1.

Meanwhile, in the case of the present embodiment, the viewer's terminal 3 can be used as a content playback device in accordance with the present invention by running a content playback application on a general purpose computer such as the personal computer, however, the present invention is not limited thereto but can be applied, for example, to a system in which a setup box, a home server or the like is used to temporarily store content, and a dedicated playback device is used to playback the content.

Fig. 2(a) is a block diagram for showing the internal configurations of the content delivery server 1 and the viewer's terminal 3 in accordance with the present embodiment, and Fig. 2(b) is an explanatory view for showing the data structure of streaming data.

As shown in the same figure (a), the content delivery server 1 is a server device for delivering content data which contains main story information and advertisement information inserted thereinto, and provided with an index data adding unit 1a, a combining unit 1b, a content transmitting unit 1c, a data managing unit 1d, a delivery request receiving unit 1e, an advertisement information database 11 and a main story database 12.

The combining unit 1b is a module which serves to combine advertisement information d3 and a main story d2 as input from the data managing unit 1d, as shown in Fig. 2(b), generate a flow of streaming data, and add index data d1 generated by the index data adding unit 1a to the head of the streaming data.

The index data adding unit 1a is a module which serves to generate index data describing the positions at which the advertisement information is inserted, and add the index data as generated to the content data which is generated through combination by the combining unit 1b. The index data d1 describes the positions of the main story and the advertisement information in the streaming data. For example, in the case of the streaming data shown in Fig. 2(b), the start points t0 and t2 of a main story d2 and the start point t1 of advertisement information are described.

The content transmitting unit 1c is a communication interface, which is connected to the network 2, and packetizes the content data generated by the combining unit 1b to output the content data in response to the delivery request from the viewer's terminal 3.

The data managing unit 1d is a module which serves to manage data accumulated in the advertisement information database 11 and the main story database 12, select necessary main story and advertisement information in accordance with the delivery request as received by the delivery request receiving unit 1e, read them from the respective databases and output them to the combining unit 1b. At this time, the data managing unit 1d selects the advertisement information to be inserted into the main story and determines the insertion frequency and so forth in accordance with the properties of the viewer authenticated by the delivery request receiving unit 1e. Also, the data managing unit 1d notifies the index data adding unit 1a of the positions in which the advertisement information is inserted and the insertion frequency.

The delivery request receiving unit 1e is connected to the network 2, and a module which receives a delivery request from the viewer's terminal 3, authenticates the viewer on the basis of the ID and password contained in the delivery request, instructs the data managing unit 1d to deliver content.

The advertisement information database 11 is a database device for accumulating motion pictures and still images such as CM and advertisement information data such as text information. The main story database 12 is a database device for accumulating main story data such as movies and programs. Reading data from these databases is performed in response to the instruction from the data managing unit 1d.

On the other hand, as shown in Fig. 2(a), the viewer's terminal 3 is provided with a content receiving unit 3a, an index data extracting unit 3b, a playback unit 3c, an output interface 3d, a delivery request transmitting unit 3e, a playback control unit 3f, a communication control unit 3g, an operation control unit 3h, an input interface 3i and a storing unit 31.

The content receiving unit 3a is a communication interface connected to the network 2 and a module which serves to receive packets as transmitted from the content transmitting unit 1c of the content delivery server 1, reconstruct streaming data, and output the streaming data to the index data extracting unit 3b.

The index data extracting unit 3b is a module which serves to extract the index data added to the above content data, store the index data in the storing unit 31, and output the content data after extracting the index data to the playback unit 3c. The storing unit 31 is a storage device for storing the index data as extracted by the index data extracting unit 3b, and may be a memory device, a hard disk drive and so forth. The index data stored in this storing unit 31 is output to the operation control unit 3h in response to the request from the operation control unit 3h.

The playback unit 3c is a module which serves to output the streaming data as images and sounds to the display 4 and a speaker (not shown in the figure) through the output interface 3d. The operation of this playback unit 3c is controlled by the playback control unit 3f.

The output interface 3d is an interface for connecting with external output devices such as the display 4 and the speaker. The input interface 3i is the interface for connecting with input devices such as a mouse 5a and a keyboard 5b.

The delivery request transmitting unit 3e is a communication module which serves to transmit a delivery request to the content delivery server 1 in response to the operation of the viewer. This delivery request contains the ID and password of the viewer, the ID for identifying the content which is desired to watch, the address of the viewer's terminal 3 and so forth.

The playback control unit 3f is a module which serves to control the operation of the playback unit 3c in accordance with the control by the operation control unit 3h, and control the operations of starting, halting, fast-forwarding and rewinding the playback and other operations by the playback unit 3c. The communication control unit 3g is a module which serves to perform controlling the operations of communication modules, for example, requesting to deliver content, receiving the content as delivered and the like in response to the operation of the viewer.

The operation control unit 3h is a module which serves to control the playback control unit 3f and the communication control unit 3g on the basis of the operation signals as input from the mouse 5a and the keyboard 5b through the input interface 3i. Particularly, this operation control unit 3h performs controlling the playback control unit 3f in accordance with the description of the index data stored in the storing unit 31. More specifically speaking, in the case of the present embodiment, the operation control unit 3h acquires the location of the advertisement information described in the index data from the storing unit 31, and inhibits the playback control unit 3f from performing such operations as the playback is performed to avoid the location, for example, fast-forwarding and skipping the location of the advertisement information. In addition to this, the operation control unit 3h is provided with the function to inhibit the playback of the main story in the case where content data is not stored in the storing unit 31. Furthermore, the operation control unit 3h is provided with the function that, when the playback is to be started beyond the position from which advertisement information is inserted, the playback beyond the insertion position is performed only after performing the playback of the advertisement information.

### (Content Delivery)

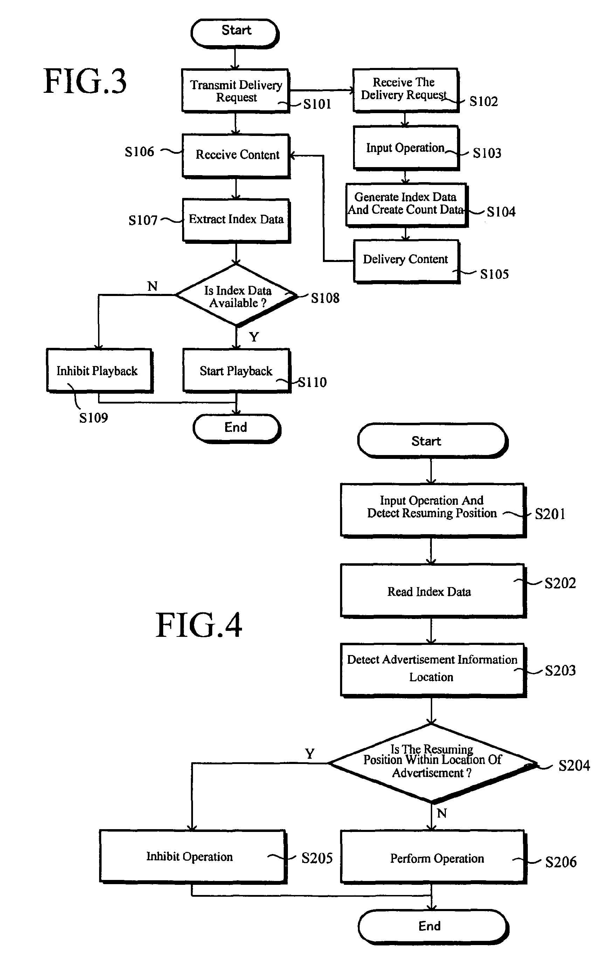

By the use of the content delivery system in accordance with the present embodiment having the structure as described above, the content delivery method is performed by the following procedure. Fig. 3 and Fig. 4 are flow diagrams for showing the procedure of the content delivery method in accordance with the present embodiment.

First, a delivery request is transmitted to the content delivery server 1 from the delivery request transmitting unit 3e in response to the operation of the viewer's terminal 3 by the viewer in step S101. This delivery request contains the password and ID of the viewer, the content which is desired to watch, the address of the viewer's terminal 3 and so forth. After receiving this delivery request, the content delivery server 1 authenticates the viewer by the delivery request receiving unit 1e (in steps S102 and S103), and if the viewer is authenticated, the content delivery server 1 informs the data managing unit 1d of the content to be delivered (the main story and the advertisement information). Also, at this time, the data managing unit 1d instructs the index data adding unit 1a to generate index data.

In response to the above instruction, the data managing unit 1d reads necessary content from the advertisement information database 11 and the main story database 12, and outputs it to the combining unit 1b. The combining unit 1b combines the data of the main story and the data of the advertisement information as input from the data managing unit 1d, adds the index data generated by the index data adding unit 1a in step S104, and outputs the data to the content transmitting unit 1c. The content transmitting unit 1c packetizes the content data as generated, and outputs the data to the address of the viewer's terminal 3 which is contained in the delivery request in step S105.

On the other hand, the viewer's terminal 3 receives the packetized content data through the content receiving unit 3a in step S106, extracts the index data by the index data extracting unit 3b, and stores the index data in the storing unit 31 in step S107. Then, the playback of the content as received is started by the operation control unit 3h and the playback control unit 3f.

When starting the playback of this content, the operation control unit 3h searches the storing unit 31 in order to determine whether or not the index data is received in step S108. If it is determined that the index data is not received ("N" in step S108 in the figure), the playback control unit 3f is controlled to inhibit the playback in step S109. Conversely, if it is determined in step S108 that the index data is received ("Y" in step S108 in the figure), the playback is started in step S110.

Next is an explanation of the case where the viewer performs such an operation as advertisement information is avoided during playing back the content. As illustrated in Fig. 4, when the viewer performs an operation such as a fast-forwarding or skipping operation, the position (the current playback position of the streaming data) at which the fast-forwarding operation is started is detected as well as the position from which the playback is to be resumed after performing the operation in step S201, and in addition to this, the index data is read from the storing unit 31 to detect the location of the advertisement information (t1 to t2 as shown in Fig. 2) in step S203.

Then, it is determined whether or not the operation is such that the advertisement information is avoided in step S204 by comparing the location of the advertisement information with the position at which the operation is started and the position from which the operation is to be resumed, and if the operation is such that the advertisement information is avoided ("Y" in step S204 in the figure), the operation control unit 3h controls the playback control unit 3f for inhibiting the operation, conversely if the operation is such that the advertisement information is not avoided ("N" in step S204 in the figure), the operation is performed.

In addition to this, when the operation of the viewer in step S201 is to perform the operation of skipping or playing back from the middle of the content to start the playback beyond the position from which advertisement information is inserted, the process of inhibiting the operation in the step S205 is performed such that the playback beyond the insertion position is performed only after performing the playback of the advertisement information.

### (Actions/Effects)

In accordance with the content delivery system and method of the present embodiment, the location of advertisement information in content is notified through index data to the viewer's terminal 3 in which the playback operation is controlled on the basis of the data, and thereby it is possible to inhibit such a user operation as the advertisement information is avoided, for example, fast-forwarding beyond the advertisement information, even when the content is being played back in a position other than the insertion position of advertisement information.

Also, in the case of the present embodiment, when starting the playback of the content, the playback of the main story information is inhibited in accordance with whether or not there is content data, and thereby it is possible to inhibit unauthorized operations such as playing back from the middle of the content data or erasing the index data. In accordance with the above invention, when the playback is to be started beyond the position from which advertisement information is inserted, the playback beyond the insertion position is performed only after performing the playback of the advertisement information, and thereby it is possible to forcibly display the advertisement information even when performing an operation such that the advertisement information is avoided, for example, the operation of skipping or playing back from the middle.

### [Second Embodiment]

Next, a second embodiment of the present invention will be explained in detail. The overall configuration of the system in accordance with the present embodiment has the same configuration as illustrated in Fig. 1.

### (Configuration of System)

The content delivery system in accordance with the second embodiment of the present invention includes a content delivery server 1 managed by a content provider who delivers content such as image content, and a viewer's terminal 3 owned by a viewer who watches content serviced by delivery through the network 2 in the same manner as in the first embodiment as described above.

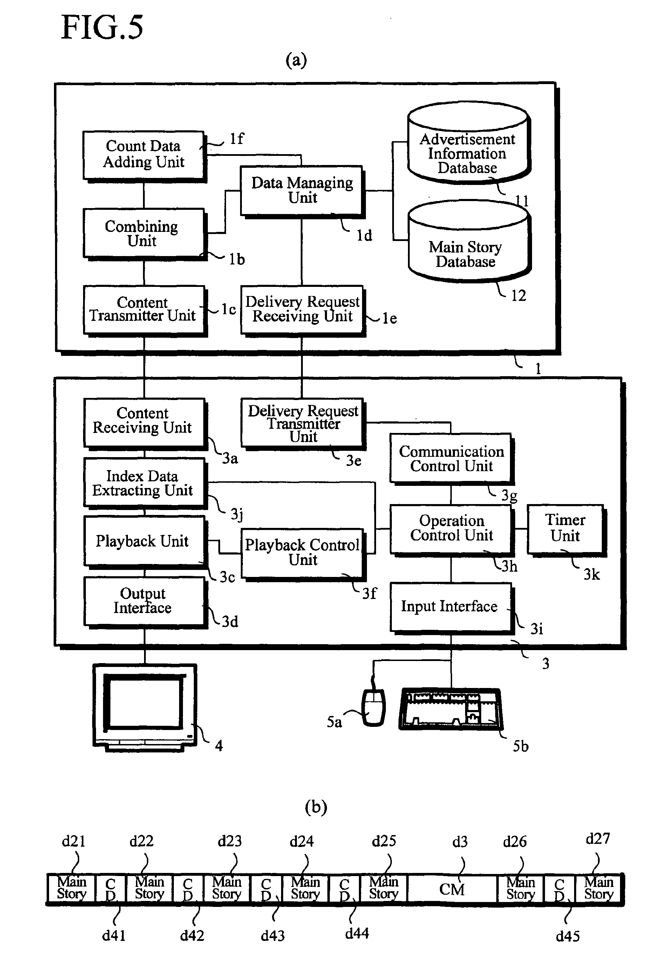

Fig. 5(a) is a block diagram for showing the internal configurations of the content delivery server 1 and the viewer's terminal 3 in accordance with the present embodiment, and Fig. 5(b) is an explanatory view for showing the data structure of streaming data.

As shown in the same figure (a), the content delivery server 1 is a server device for delivering content data which contains main story information and advertisement information inserted thereinto, and provided with a count data adding unit 1f, a combining unit 1b, a content transmitting unit 1c, a data managing unit 1d, a delivery request receiving unit 1e, an advertisement information database 11 and a main story database 12.

The combining unit 1b is a module which serves to combine advertisement information d3 and a main story d2 as input from the data managing unit 1d, as shown in Fig. 5(b), generate a flow of streaming data, and add index data d1 generated by the index data adding unit 1a to the head of the streaming data.

The count data adding unit 1f is a module which serves to generate count data relating to the data length of the advertisement information and the relative data length between a predetermined position of the main story and the position from which advertisement information is inserted, and periodically add the count data as generated to the content data generated by the combining unit 1b. The count data is data which is periodically inserted into the main story (portions d21 to d27 shown in the figure are segments of the main story data as separated by the count data), for example, and labelled with d41 to d45 as shown in Fig. 5(b), and contains the relative data length between the insertion position and the advertisement information d3 and the data length of the advertisement information d3.

The content transmitting unit 1c is a communication interface, which is connected to the network 2, and packetizes the content data generated by the combining unit 1b to output the content data in response to the delivery request from the viewer's terminal 3.

The data managing unit 1d is a module which serves to manage data accumulated in the advertisement information database 11 and the main story database 12, select necessary main story and advertisement information in accordance with the delivery request as received by the delivery request receiving unit 1e, read them from the respective databases and output them to the combining unit 1b. At this time, the data managing unit 1d selects the advertisement information to be inserted into the main story and determines the insertion frequency and so forth in accordance with the properties of the viewer authenticated by the delivery request receiving unit 1e. Also, the data managing unit 1d notifies the count data adding unit 1f of the positions in which the advertisement information is inserted and the insertion frequency.

The delivery request receiving unit 1e is connected to the network 2, and a module which receives a delivery request from the viewer's terminal 3, authenticates the viewer on the basis of the ID and password contained in the delivery request, and instructs the data managing unit 1d to deliver content.

The advertisement information database 11 is a database device for accumulating motion pictures and still images such as CM and advertisement information data such as text information. The main story database 12 is a database device for accumulating main story data such as movies and programs. Reading data from these databases is performed in response to the instruction from the data managing unit 1d.

On the other hand, as shown in Fig. 5(a), the viewer's terminal 3 is provided with a content receiving unit 3a, a count data extracting unit 3j, a playback unit 3c, an output interface 3d, a delivery request transmitting unit 3e, a playback control unit 3f, a communication control unit 3g, an operation control unit 3h, an input interface 3i and a timer unit 3k.

The content receiving unit 3a is a communication interface connected to the network 2 and a module which serves to receive packets as transmitted from the content transmitting unit 1c of the content delivery server 1, reconstruct streaming data, and output the streaming data to the count data extracting unit 3j.

The count data extracting unit 3j is a module which serves to extract the count data periodically added to the above content data, output the count data as extracted to the operation control unit 3h, and output the content data after extracting the count data to the playback unit 3c.

The timer unit 3k is a module which is operated when the count data is input to the operation control unit 3h, and serves to measure the elapsed time after the playback time at which the count data is inserted and output the measurement result to the operation control unit 3h. In the case of the present embodiment, the timer unit 3k is reset every time the count data is extracted and input to the operation control unit 3h, and starts measuring the elapsed time again from the time as reset.

The playback unit 3c is a module which serves to output the streaming data as images and sounds to the display 4 and a speaker (not shown in the figure) through the output interface 3d. The operation of this playback unit 3c is controlled by the playback control unit 3f. The output interface 3d is an interface for connecting with external output devices such as the display 4 and the speaker. The input interface 3i is the interface for connecting with input devices such as a mouse 5a and a keyboard 5b.

The delivery request transmitting unit 3e is a communication module which serves to transmit a delivery request to the content delivery server 1 in response to the operation of the viewer. This delivery request contains the ID and password of the viewer, the ID for identifying the content which is desired to watch, the address of the viewer's terminal 3 and so forth.

The playback control unit 3f is a module which serves to control the operation of the playback unit 3c in accordance with the control by the operation control unit 3h, and control the operations of starting, halting, fast-forwarding and rewinding the playback and other operations by the playback unit 3c. The communication control unit 3g is a module which serves to perform controlling the operations of communication modules, for example, requesting to deliver content, receiving the content as delivered and the like in response to the operation of the viewer.

The operation control unit 3h is a module which serves to control the playback control unit 3f and the communication control unit 3g on the basis of the operation signals as input from the mouse 5a and the keyboard 5b through the input interface 3i. Particularly, this operation control unit 3h performs controlling the playback control unit 3f in accordance with the description of the count data stored in the storing unit 31. More specifically speaking, in the case of the present embodiment, the operation control unit 3h acquires the location of the advertisement information described in the count data from the storing unit 31, and inhibits the playback control unit 3f from performing such operations as the playback is performed to avoid the location, for example, fast-forwarding and skipping the location of the advertisement information. In addition to this, the operation control unit 3h is provided with the function to inhibit the playback of the main story in the case where content data is not stored in the storing unit 31. Furthermore, the operation control unit 3h is provided with the function that, when the playback is to be started beyond the position from which advertisement information is inserted, the playback beyond the insertion position is performed only after performing the playback of the advertisement information.

### (Content Delivery)

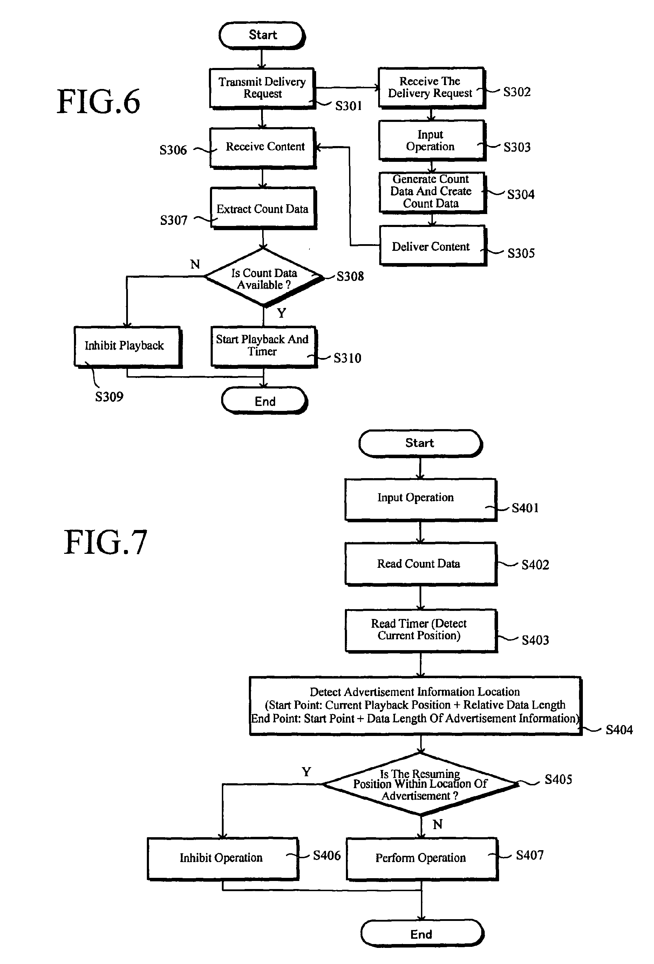

By the use of the content delivery system in accordance with the present embodiment having the structure as described above, the content delivery method is performed by the following procedure. Fig. 6 and Fig. 7 are flow diagrams for showing the procedure of the content delivery method in accordance with the present embodiment.

First, a delivery request is transmitted to the content delivery server 1 from the delivery request transmitting unit 3e in response to the operation of the viewer's terminal 3 by the viewer in step S301. This delivery request contains the password and ID of the viewer, the content which is desired to watch, the address of the viewer's terminal 3 and so forth. After receiving this delivery request, the content delivery server 1 authenticates the viewer by the delivery request receiving unit 1e (in steps S302 and S303), and if the viewer is authenticated, the content delivery server 1 informs the data managing unit 1d of the content to be delivered (the main story and the advertisement information). Also, at this time, the data managing unit 1d instructs the count data adding unit 1f to generate count data.

In response to the above instruction, the data managing unit 1d reads necessary content from the advertisement information database 11 and the main story database 12, and outputs it to the combining unit 1b. The combining unit 1b combines the data of the main story and the data of the advertisement information as input from the data managing unit 1d, periodically adds the count data generated by the count data adding unit 1f in step S304, and outputs the data to the content transmitting unit 1c. The content transmitting unit 1c packetizes the content data as generated, and outputs the data to the address of the viewer's terminal 3 which is contained in the delivery request in step S305.

On the other hand, the viewer's terminal 3 receives the packetized content data through the content receiving unit 3a in step S306, extracts the count data by the count data extracting unit 3j, and output the count data to the operation control unit 3h in step S307. Then, the playback of the content as received is started by the operation control unit 3h and the playback control unit 3f.

When starting the playback of this content, the operation control unit 3h searches the storing unit 31 in order to determine whether or not the count data is received in step S308. If it is determined that the count data is not received ("N" in step S308 in the figure), the playback control unit 3f is controlled to inhibit the playback in step S309. Conversely, if it is determined in step S308 that the count data is received ("Y" in step S308 in the figure), the playback is started in step S310.

Next is an explanation of the case where the viewer performs such an operation as advertisement information is avoided during playing back the content. As illustrated in Fig. 7, when the viewer performs an operation such as a fast-forwarding or skipping operation, the position (the current playback time of the streaming data) at which the fast-forwarding operation is started is detected as well as the position from which the playback is to be resumed after performing the operation in step S401, and in addition to this, the count data and the timer are read to calculate the start point of the advertisement information location on the basis of the relative data length from the current playback position and calculate the end point of the advertisement information location on the basis of the start point and the data length of the advertisement information (steps S402 to S404).

Then, it is determined whether or not the operation is such that the advertisement information is avoided in step S405 by comparing the location of the advertisement information with the position at which the operation is started and the position from which the operation is to be resumed, and if the operation is such that the advertisement information is avoided ("Y" in step S405 in the figure), the operation control unit 3h controls the playback control unit 3f for inhibiting the operation, conversely if the operation is such that the advertisement information is not avoided ("N" in step S405 in the figure), the operation is performed.

In addition to this, when the operation of the viewer in step S401 is to perform the operation of skipping or playing back from the middle of the content to start the playback beyond the position from which advertisement information is inserted, the process of inhibiting the operation in the step S405 is performed such that the playback beyond the insertion position is performed only after performing the playback of the advertisement information.

### (Actions/Effects)

In accordance with the content delivery system and method of the present embodiment, the location of advertisement information in content is notified through count data to the viewer's terminal 3 in which the playback operation is controlled on the basis of the data, and thereby it is possible to inhibit such a user operation as the advertisement information is avoided, for example, fast-forwarding beyond the advertisement information, even when the content is being played back in a position other than the insertion position of advertisement information. Particularly, since the count data is periodically inserted into the main story, even when performing an operation to change the playback position such as playing back from the middle position of the content, fast-forwarding and rewinding, it is possible to accurately identify the position of the advertisement information.

Also, in the case of the present embodiment, when starting the playback of the content, the playback of the main story information is inhibited in accordance with whether or not there is content data, and thereby it is possible to inhibit unauthorized operations such as playing back from the middle of the content data or erasing the count data.

In accordance with the above invention, when the playback is to be started beyond the position from which advertisement information is inserted, the playback beyond the insertion position is performed only after performing the playback of the advertisement information, and thereby it is possible to forcibly display the advertisement information even when performing an operation such that the advertisement information is avoided, for example, the operation of skipping or playing back from the middle.

### [Content Delivery Program And Content Playback Program]

The content delivery systems and methods in accordance with the first embodiment and the second embodiment as described above can be implemented by running a content delivery program and a content playback program which are written in an appropriate language on a computer. Namely, the content delivery server and the viewer's terminal device having the respective features as described above can be easily constructed by installing these programs in a user terminal, a computer such as a Web server or an IC chip. These programs can be distributed through a communication line or can be delivered as a package application which can be operated on a stand-alone computer.

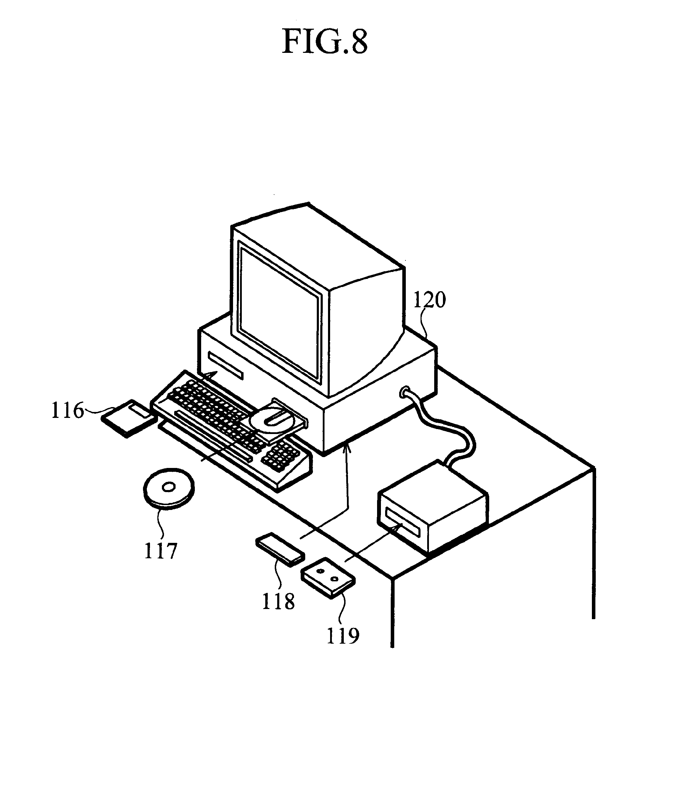

Incidentally, these programs can be stored in a recording medium 116 to 119 readable by a general purpose computer 120 as illustrated in Fig. 8. More specifically speaking, as shown in the same figure, these programs can be stored in a magnetic recording medium such as a flexible disk 116 or a cassette tape 119, an optical disk such as a CD-ROM or DVD-ROM 117, or any other appropriate recording medium such as a RAM card 118. The present embodiment is characterized in that content contained in the non-rewritable CD-ROM or DVD-ROM 117 can be linked.

Then, in accordance with this computer readable medium in which these programs are stored, it is possible to realize a content delivery system and method as described above by the use of a general purpose computer or a dedicated computer, and to easily save, deliver and install these programs.

### [Industrial Applicability]

In accordance with the content delivery system, the content delivery method, the content delivery server, the content playback device, the content delivery program and the content playback program as described above, it is possible to ensure that advertisement information is more certainly displayed when the content is played back at the viewer end in the streaming delivery of motion pictures on the Internet.

## Claims

1. A content delivery system that delivers content data including main story information into which advertisement information is inserted, comprising:
an index adding unit operable to add index data describing the insertion position of said advertisement information to said content data;
a transmitting unit operable to transmit the content data to which said index data is added in response to a delivery request;
a receiving unit operable to receive the content data as transmitted from said transmitting unit;
a playback unit operable to play back said content data; and
an operation control unit operable to extract said index data and control the operation of said playback unit in accordance with the description of the index data.

2. A content delivery system that delivers content data including main story information into which advertisement information is inserted, comprising:
a count adding unit operable to add count data relating to the data length of the advertisement information and a relative data length between a predetermined position of the main story and the insertion position of said advertisement information periodically into said content data;
a transmitting unit operable to transmit the content data to which said count data is added in response to a delivery request;
a receiving unit operable to receive the content data as transmitted from said transmitting unit;
a playback unit operable to play back said content data; and
an operation control unit operable to extract said count data and control the operation of said playback unit in accordance with the description of the count data.

3. The content delivery system as claimed in claim 1 or 2 wherein said operation control unit controls said operation in order to inhibit said playback unit from fast-forwarding said advertisement information.

4. The content delivery system as claimed in any one of claims 1 to 3 wherein said operation control unit inhibits the playback of said main story information in accordance with whether or not there is said content data or count data.

5. The content delivery system as claimed in any one of claims 1 to 3 wherein, when playback is to be started beyond an insertion start position of advertisement information, said operation control unit performs the playback beyond the insertion start position only after performing the playback of said advertisement information.

6. A content delivery method that delivers content data including main story information into which advertisement information is inserted, comprising:
a first step of adding index data describing the insertion position of said advertisement information to said content data;
a second step of transmitting the content data to which said index data is added in response to a delivery request;
a third step of receiving said content data as transmitted; and
a fourth step of extracting said index data and control an operation relating to the playback of said content data in accordance with the description of the index data.

7. A content delivery method that delivers content data including main story information into which advertisement information is inserted, comprising:
a first step of adding count data relating to the data length of the advertisement information and a relative data length between a predetermined position of the main story and the insertion position of said advertisement information periodically into said content data;
a second step of transmitting the content data to which said count data is added in response to a delivery request;
a third step of receiving said content data as transmitted; and
a fourth step of extracting said count data and controlling an operation relating to the playback of said content data in accordance with the description of the count data.

8. The content delivery method as claimed in claim 6 or 7 wherein, in said fourth step, said operation is controlled in order to inhibit fast-forwarding said advertisement information.

9. The content delivery method as claimed in any one of claims 6 to 8 wherein, in said fourth step, the playback of said main story information is inhibited in accordance with whether or not there is said content data or count data.

10. The content delivery method as claimed in any one of claims 6 to 9 wherein, in said fourth step, when playback is to be started beyond an insertion start position of advertisement information, the playback beyond the insertion start position is performed only after performing the playback of said advertisement information.

11. A content delivery server that delivers content data including main story information into which advertisement information is inserted, comprising:
an index adding unit operable to add index data describing the insertion position of said advertisement information to said content data;
a transmitting unit operable to transmit the content data to which said index data is added in response to a delivery request;

12. A content delivery server that delivers content data including main story information into which advertisement information is inserted, comprising:
a count adding unit operable to add count data relating to the data length of the advertisement information and a relative data length between a predetermined position of the main story and the insertion position of said advertisement information periodically into said content data;
a transmitting unit operable to transmit the content data to which said count data is added in response to a delivery request;

13. A content playback device that plays back content data including main story information into which advertisement information is inserted, comprising:
a playback unit operable to play back said content data; and
an operation control unit operable to extract index data which is added to said content data and describes the insertion position of said advertisement information, and control the operation of said playback unit in accordance with the description of the index data.

14. A content playback device that plays back content data including main story information into which advertisement information is inserted, comprising:
a playback unit operable to play back said content data; and
an operation control unit operable to extract count data which is periodically inserted into said content and relates to the data length of the advertisement information and a relative data length between a predetermined position of the main story and the insertion position of said advertisement information, and controlling the operation of said playback unit in accordance with the description of the count data.

15. The content playback system as claimed in claim 13 or 14 wherein said operation control unit controls said operation in order to inhibit said playback unit from fast-forwarding said advertisement information.

16. The content playback system as claimed in any one of claims 13 to 15 wherein said operation control unit inhibits the playback of said main story information in accordance with whether or not there is said content data or count data.

17. The content playback system as claimed in any one of claims 13 to 16 wherein, when playback is to be started beyond an insertion start position of advertisement information, said operation control unit performs the playback beyond the insertion start position only after performing the playback of said advertisement information.

18. A content delivery program that delivers content data including main story information into which advertisement information is inserted, comprising:
a first step of adding index data describing the insertion position of said advertisement information to said content data;
a second step of transmitting the content data to which said index data is added in response to a delivery request;

19. A content delivery program that delivers content data including main story information into which advertisement information is inserted, and makes a computer perform:
a first step of adding count data relating to the data length of the advertisement information and a relative data length between a predetermined position of the main story and the insertion position of said advertisement information periodically into said content data;
a second step of transmitting the content data to which said count data is added in response to a delivery request;

20. A content playback program that plays back content data including main story information into which advertisement information is inserted, and makes a computer perform:
a first step of extracting index data which is added to said content data and describes the insertion position of said advertisement information;
a second step of controlling an operation relating to the playback of said index data in accordance with the description of the count data.

21. A content playback program that plays back content data including main story information into which advertisement information is inserted, and makes a computer perform:
a first step of extracting count data which is periodically inserted into said content and relates to the data length of the advertisement information and a relative data length between a predetermined position of the main story and the insertion position of said advertisement information.
a second step of controlling the operation of said content data in accordance with the description of the count data.

22. The content playback program as claimed in claim 20 or 21 wherein, in said second step, said operation is controlled in order to inhibit fast-forwarding said advertisement information.

23. The content playback program as claimed in any one of claims 20 to 22 wherein, in said second step, the playback of said main story information is inhibited in accordance with whether or not there is said content data or count data.

24. The content playback program as claimed in any one of claims 20 to 22 wherein, in said second step, when playback is to be started beyond an insertion start position of advertisement information, the playback beyond the insertion start position is performed only after performing the playback of said advertisement information.
